# EUROPEAN PATENT APPLICATION

(11) **EP 1 840 447 A1**
(43) Date of publication of application: **03.10.2007**
(21) Application number: 07251300.5
(22) Date of filing: 27.03.2007
(51) Int. Cl.: F16M 11/38, F16M 11/18, F16M 11/14

(54) **Display rotation apparatus**

(30) Priority: 27.03.2006 KR 20060027464
(71) Applicant: Samsung Electro-Mechanics Co., Ltd, Yeongtong-gu Suwon-si Gyeonggi-do 443-743 (KR)
(72) Inventor: Choi, Dong-Won 103-904 Woncheon Jugong 1 danji, Suwon-si Gyeonggi-do 443-755 (KR); Lee, Chil-Sung, Suwon-si Gyeonggi-do 441-758 (KR); Park, Kyoung-Shin 208-604 Woncheon Jugong 2danji, Yeongtong-gu Suwon-si Gyeonggi-do 443-756 (KR); Kim, Jae-Kyung, Ansan-si Gyeonggi-do 426-150 (KR)
(74) Representative: Mounteney, Simon James

(57) **Abstract**

The present invention relates to a display rotation apparatus. The present invention provides a display rotation apparatus, including a support (4), a universal joint (2) coupled to the support, a movable body (1) coupled to the universal joint, a driving part (3) coupled to the movable body for rotating the movable body about the universal joint.

## Description

### Field of the Invention

The present invention relates to a display rotation apparatus.

### Background of the Invention

Flat panel displays encompass a number of technologies, such as Liquid Crystal Displays (LCDs), Plasma Display Panels (PDPs), and Light Emitting Diode (LED) displays, that are now commonly applied to televisions and video displays.

Flat panel displays are gradually replacing Cathode Ray Tubes (CRTs) monitors or televisions for reasons that flat panel displays are much lighter and thinner thereby providing the advantage of space saving.

LCD TV and PDP TV are also commonly installed or mounted on a wall - often referred to as "wall mounted TV" - to provide a wide viewing angle for the viewers. However, when the TV is installed on the wall, the viewer might not obtain a good view of the screen as he moves to different locations in a room. Due to the narrow distance between the back of the wall mounted TV and the wall, it is difficult to adjust the direction of orientation of the TV screen to accommodate the viewer's position. One way of solving this problem is to permanently increase the distance between the back of the TV and the wall. However, this would then defeat the advantage of space saving provided by the wall mounted TV.

### Summary of the Invention

An aspect of the present invention is to provide a display rotation apparatus protruding from the wall that is capable of automatic and manual rotation.

One aspect of the present invention provides a display rotation apparatus, including a support, a universal joint coupled to the support, a movable body coupled to the universal joint, and a driving part coupled to the movable body for rotating the movable body about the universal joint.

The driving part may include a tension member coupled to two points facing each other about the universal joint, a roller member for guiding the route of the tension member, and a first motor part positioned on the route of the tension member for supplying a tensile force to the tension member. The display rotation apparatus may further include a tension controlling device on the route of the tension member. The display rotation apparatus may further include an elastic body having one end coupled to the movable body, wherein the elastic body may supply an elastic force opposite the gravitational moment of the display to the movable body.

The first motor part may include a motor and a slip pulley coupled to a driving shaft of the motor, where the tension member may be coupled to the slip pulley.

The support may include a couple portion coupled with the universal joint, a link portion having one end coupled to the couple portion, a second motor part coupled to the joining point of the link portion, and a fixed body coupled with the other end of the link portion, wherein the couple portion may be extendable from the fixed body while driving the link portion.

The link portion may include a first hinge member and a second hinge member respectively coupled with the fixed body, a first link element having one end rotatably coupled with the first hinge member, a second link element having one end rotatably coupled with the second hinge member, a third link element having one end rotatably coupled with the first link element by way of an interposed third hinge member, a fourth link element having one end rotatably coupled with the second link element by way of an interposed fourth hinge member, and a fifth hinge member and a sixth hinge member respectively coupled with the couple portion, where the other end of the third link element may be rotatably coupled with the fifth hinge member, and the other end of the fourth link element may be rotatably coupled with the sixth hinge member.

The display rotation apparatus may further include a first gear coupled with the perimeter of the first hinge member, a second gear coupled with the perimeter of the second hinge member and meshed with the first gear.

The display rotation apparatus may further include a first gear coupled with the perimeter of the fifth hinge member, and a second gear coupled with the perimeter of the sixth hinge member and meshed with the first gear.

The second motor part may be coupled with any one or more of the first hinge member through the sixth hinge member.

The first gear and the second gear may be coupled by an even number of idle gears.

The first motor part and the second motor part may respectively include a motor and a rotary part, where the rotary part may include a clutch unit coupled with a driving shaft, and a driven shaft in contact with the clutch unit, with the driving force of the motor smaller than the frictional force between the driven shaft and the clutch unit.

The frictional force between the driven shaft and the clutch unit may be smaller than the cogging torque of the motor.

The display rotation apparatus may further include one or more washers interposed between the clutch unit and driven shaft.

Additional aspects and advantages of the present invention will become apparent and more readily appreciated from the following description, including the appended drawings and claims, or may be learned by practice of the invention.

### Brief description of the drawings

These and/or other aspects and advantages of the present general inventive convept will become apparent and more readily appreciated from the following description of the embodiments, taken in conjunction with the accompanying drawings of which:
Fig. 1 is a side view of a display rotation apparatus in accordance with a first embodiment of the present invention;
Fig. 2 is a perspective view of a first motor part in accordance with a second embodiment of the present invention;
Fig. 3 is a cross-sectional view of a rotary part of a first motor part in accordance with a second embodiment of the present invention;
Fig. 4 is a plan view of a support in accordance with a third embodiment of the present invention;
Fig. 5a is a side view of a display rotation apparatus in accordance with a fourth embodiment of the present invention; and
Fig. 5b is a plan view of a display rotation apparatus in accordance with a fourth embodiment of the present invention.

### Detailed Description

Hereinafter embodiments of a display rotation apparatus according to the present invention will be described in more detail by way of example with reference to the accompanying drawings.

In the following description, a number of specific details are presented in order to provide a thorough understanding of embodiments of the present invention. It will be apparent, however, to a person skilled in the art that these specific details need not be employed to practice the present invention.

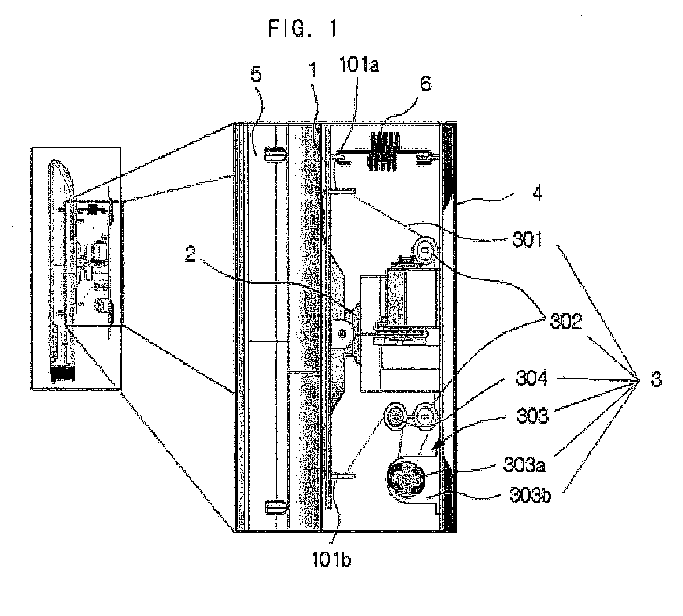

Fig. 1 illustrates a side view of a display rotation apparatus according to a first embodiment of the present invention. Referring to Fig. 1, a movable body 1, connecting members 101a, 101b, a universal joint 2, a driving mechanism 3, a tension member 301, roller members 302, a first motor part 303, a motor 303b, a slip pulley 303a, a tension controlling device 304, a support 4, a display 5, and a resilient means 6 are illustrated.

As shown in Fig. 1, the movable body 1 is coupled to the display 5 as one body. The movable body 1 is also coupled with the support 4 through the universal joint 2. The movable body 1 includes the connecting members 101a, 101b coupled to the tension member 301. The connecting members (101a, 101b) may be attached to the movable body 1 symmetrically about the universal joint 2 for smooth up-down movements of the display 5. A further pair of connecting members (not shown) may also be formed symmetrically on the movable body about the universal joint 2 for right-left rotating.
The resilient means 6 is coupled with the movable body 1 and the support 4 in order to counteract with the gravitational moment of the display 5. The typical weight of a flat screen TV is about 10 kg. Therefore, the display 5 tends to droop down around the universal joint 2 if the resilient means 6 is not coupled between movable body 1 and support 4. As a result, the gravitational moment of the display causes the tension member 301 to undergo high tension. When the display 5 is moved under this condition, the motor 303b will be overloaded due to the tension force being exerted on the tension member 301. As shown in Fig. 1, a coil spring may be used as the resilient means 6, or any other types of springs may also be used. The resilient means 6 may be joined to any part of the support 4 or the movable body 1 for preventing the drooping of the display 5 caused by the gravitational moment.

The driving part 3 includes the tension member 301, the roller members 302, the first motor part 303, the motor 303b, the slip pulley 303a, and the tension controlling device 304.

The tension member 301 may be a wire, belt, or chain and so on. In the first embodiment of the present invention, a wire is used. As shown in the Fig. 1, the tension member 301 comprises a first end and a second end. The first end and the second end are attached respectively to the connecting parts 101a, 101b. The tension member 301 is also coupled to the roller members 302 (which also function as a guiding means) and the first motor part 303 for supplying tension force to the tension member 301. As shown in Fig. 1, two roller members 302 are used; however it would be appreciated by the person skilled in the art that the number of roller members 302 may vary according to the implementation.

The first motor part 303 includes a slip pulley 303a and a motor 303b, and the tension member 303 is coupled with the slip pulley 303a. In Fig. 1, since the tension member 301 is a wire, a slip pulley 303a is used. However, in the case where the tension member 301 is a chain, a corresponding sprocket may be used. As shown in Fig. 1, the first motor part 303 is coupled to the support 4. In an alternative arrangement, the first motor part 303 may also be coupled to the movable body 1.

The slip pulley 303a transfers the rotational force of the motor 303b to the tension member 301, so as to enable the display to rotate in the up-down and/or right-left directions. The frictional force between the slip pulley 303a and the tension member 301 is sufficiently large to move the display 5. Therefore, slipping will not occur between the slip pulley 303a and the tension member 301 when the motor 303b rotates.

However, slipping may occur when the tension member 301 is being moved forcefully. Therefore, this prevents the motor from being damaged by the forced movements. This is because the frictional force between tension member 301 and the slip pulley 303a is smaller than the cogging torque of the motor 303b.

The tension controlling device 304 is positioned along the tension member 301 and is coupled with the tension member 301. The tension controlling device 304 is essentially a pulley. The tension controlling device 304 may be positioned in various location in order to control the tension of the tension member. As the form and configuration of this tension controlling device 304 is well-known to the person skilled in the art, detailed description of the tension controlling device is therefore omitted. The tension controlling device 304 in the present embodiment, as illustrated in Fig. 1 is positioned at the support 4; however, it would be appreciated that it may also be positioned on the movable body 1.

The slip pulley 303a is an arrangement that may be used when the tension member 301 is a wire or a belt. This is because the slip pulley 303a and tension member 301 would not allow slipping to occur. In the case where the tension member 301 is a chain, another arrangement would be applied. The description below depicts the case where the slip pulley 303a is replaced with a sprocket.

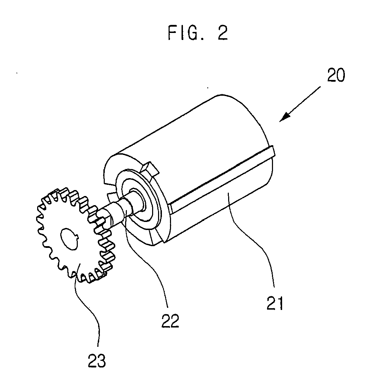

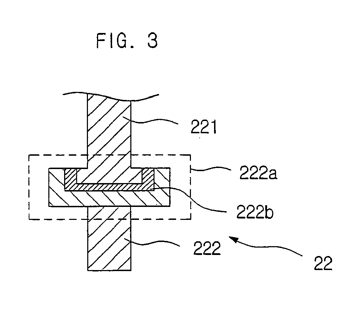

Fig. 2 is a perspective view of a first motor part according to a second embodiment of the present invention, and Fig. 3 is a cross-sectional view of a rotary part of the first motor part according to the second embodiment of the present invention. Referring to Figs. 2 and 3, a first motor part 20, a fixing part 21, a rotary part 22, a sprocket 23, a clutch unit 222a, a driving shaft 222, and a driven shaft 221 are illustrated.

The motor transfers power to the driving shaft 222 as shown in Fig. 3. The driving shaft 222 is coupled with the driven shaft 221 by the clutch unit 221a. As shown in Fig. 3, the clutch unit 222a which controls the frictional force is coupled with the driving shaft 222 as one body. The clutch unit 222a may also be coupled to the driven shaft 221. A washer 222b is interposed between the clutch unit 222a and the driven shaft 221 to maintain a constant friction.

The method of operating the rotary part 22 will now be described. When the driving shaft 222 is rotated, the driving force of the motor is smaller than the frictional force of clutch unit 222a. Thus, slipping does not occur between the clutch unit 222a and the driven shaft 221. However, in the case of the driven shaft 221 being rotated forcefully, slipping will occur. Ths is because the frictional force of the clutch unit 222a is smaller than the cogging torque of the motor. Consequently, damage to the motor cause by an external force can be prevented. A washer 222b may be interposed between the clutch unit 222a and the driven shaft 221 in order to control this frictional force.

The support 4 of Fig. 1 may be coupled with a wall or a fixed object, or the support 4 may be coupled with the link portions capable of moving the display 5.

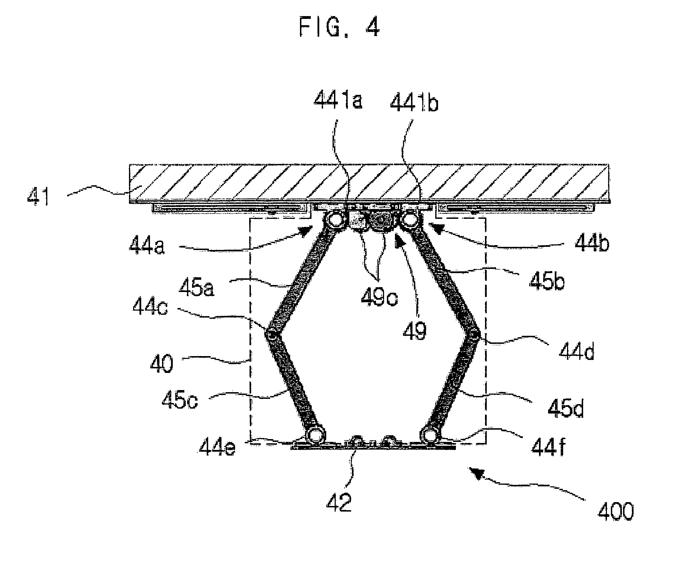

Fig. 4 is a plan view of a support according to a third embodiment of the present invention. Referring to Fig. 4, a link portion 40, a fixed body 41, a couple portion 42, a first hinge member 44a, a second hinge member 44b, a third hinge member 44c, a fourth hinge member 44d, a fifth hinge member 44e, a sixth hinge member 44f, a first link element 45a, a second link element 45b, a third link element 45c, a fourth link element 45d, a second motor part 49, idle gears 49c, and a support 400 are illustrated.

The support 400 includes of two pairs of link elements. The first link element 45a and second link element 45b are respectively coupled with the first hinge member 44a and second hinge member 44b. Therefore, the link elements 45a, 45b may rotate around the central axes of the hinge members 44a, 44b. The fixed body 41 may be a wall, but when a medium is used in-between, such a medium is also included in the fixed body 41. Moreover, the hinge members 44c-44f are respectively interposed between the link elements 45a, 45b and the link elements 45c, 45d, or between the link elements 45c, 45d and the couple portion 42

Although the second motor part 49 may be joined to any one of the hinge members 44a-44f, in this embodiment idle gears 49c are joined to the first gear 441a and second gear 441b, and the second motor part 49 is joined with an even number of idle gears 49c. An even number of idle gears 49c allow the first gear 441a and second gear 441b to rotate in opposite directions. The first and second link elements 45a, 45b operate with the same power so as to not overload either one of the link elements.

In the third embodiment, the first gear 441a and second gear 441b are respectively coupled with the first hinge member 44a and second hinge member 44b, and the idle gears 49c and the second motor part 49 are coupled between the first hinge member 44a and the second hinge member 44b. In an alternative arrangement, the idle gears 49c and the second motor part 49 may be coupled between the fifth hinge member 44e and the sixth hinge member 44f. Moreover, the first gear 441a and second gear 441b may be directly coupled together without the idle gear 49c.

The support 400 consisting of these link elements may also be moved manually, and the structure of the rotary part in the present embodiment may have the structure similar to that illustrated in Fig. 3 so as to prevent any damages to the motor of the second motor part 49.

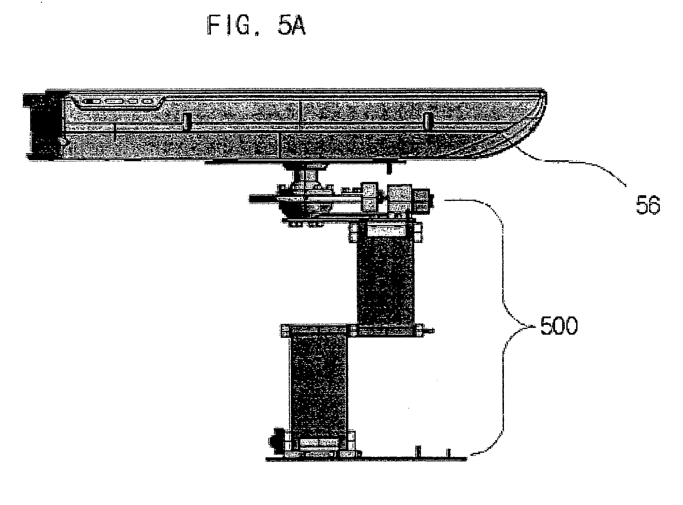

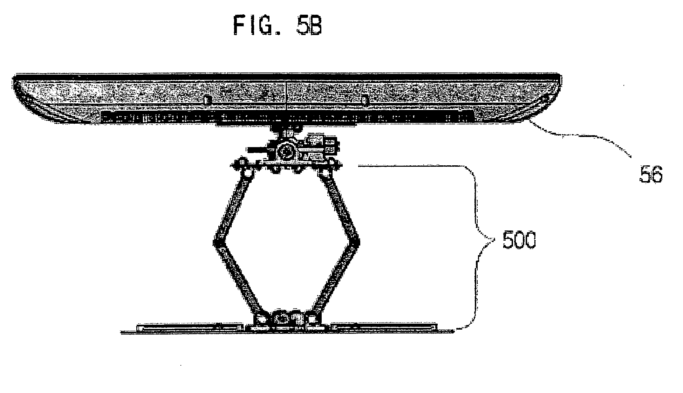

Figure 5a is a side view of the display rotation apparatus in accordance with a fourth embodiment of the present invention, and Figure 5b is a plan view of the display rotation apparatus in accordance with the fourth embodiment of the present invention. Referring to Fig. 5a and 5b, a display 56 and a support 500 are illustrated.

In this embodiment, the movable body of Fig. 1, the universal joint, and the driving part are coupled with the support 400 of Fig. 4. Referring to Fig. 5a, the link elements (in their normal position) of the support 500 are retracted so that the display 56 is positioned close to the wall. When the orientation of the display 56 needs to be changed by means of a remote controller and so on, the link elements of the support 500 are extended, and the driving part of Fig. 1 is also controlled accordingly.

According to certain aspects of the present invention as set forth above, the display can be automatically rotated in the up-down and/or left-right directions. In addition, no damage is incurred on the motor even when manual rotation is performed. Moreover, by including the link elements in this display rotation apparatus, the display can be rotated in significantly wider angles.

While the invention has been described with reference to the disclosed embodiments, it is to be appreciated that those skilled in the art can change or modify the embodiments without departing from the scope and spirit of the invention or its equivalents as stated below in the claims.

## Claims

1. A display rotation apparatus comprising:
a support;
a universal joint coupled to the support;
a movable body coupled to the universal joint;
a driving part, coupled to the movable body, for rotating the movable body about the universal joint.

2. A display rotation apparatus in accordance with claim 1, wherein the driving part comprises:
a tension member coupled to two connecting members, wherein said two connecting members are positioned about the universal joint;
a roller member for guiding the tension member; and
a first motor part, positioned on a part of the tension member, for supplying a tensile force to the tension member.

3. A display rotation apparatus in accordance with claim 1 or claim 2, wherein the display rotation apparatus further comprises a tension controlling device on another part of the tension member.

4. A display rotation apparatus in accordance with any preceding claim, wherein the display rotation apparatus further comprises a resilient means having one end coupled to the movable body, and another end coupled to the support so as to counteract the gravitational moment of a display.

5. A display rotation apparatus in accordance with any one of claims 2 to 4, wherein the first motor part comprises:
a motor; and
a slip pulley coupled to a driving shaft of the motor,
wherein the tension member is coupled to the slip pulley.

6. A display rotation apparatus in accordance with any preceding claim, wherein the support comprises:
a couple member coupled with the universal joint;
a link portion having one end coupled to the couple member;
a second motor part coupled to a joining member of the link portion; and
a fixed body coupled with the other end of the link portion,
and wherein the couple member is movable relative to the fixed body according to the movements of the link portion.

7. A display rotation apparatus in accordance with claim 6, wherein the link portion comprises:
a first hinge member and a second hinge member respectively coupled with the fixed body;
a first link element having one end movably attached to the first hinge member;
a second link element having one end movably attached to the second hinge member;
a third link element having one end movably attached to the first link element by way of an interposed third hinge member;
a fourth link element having one end movably attached to the second link element by way of an interposed fourth hinge member; and
a fifth hinge member and a sixth hinge member respectively coupled to the couple portion,
and wherein the other end of the third link element is movably attached to the fifth hinge member, and the other end of the fourth link element is movably attached to the sixth hinge member.

8. A display rotation apparatus in accordance with claim 7, wherein the display rotation apparatus further comprises:
a first gear coupled to the perimeter of the first hinge member; and
a second gear coupled to the perimeter of the second hinge member and meshed with the first gear.

9. A display rotation apparatus in accordance with claim 7, wherein the display rotation apparatus further comprising:
a first gear coupled with the perimeter of the fifth hinge member;
a second gear coupled with the perimeter of the sixth hinge member and meshed with the first gear.

10. A display rotation apparatus in accordance with claim 8 or claim 9, wherein the second motor part is coupled with any one or more of the first hinge member through the sixth hinge member.

11. A display rotation apparatus in accordance with any of claims 8 to 10, wherein the first gear and the second gear are coupled to an even number of idle gears.

12. A display rotation apparatus in accordance with claim 6, wherein the first motor part and the second motor part respectively comprises:
a motor; and
a rotary part,
wherein the rotary part comprising:
a clutch unit coupled with a driving shaft; and
a driven shaft in contact with the clutch unit;
and wherein the driving force of the motor is smaller than the frictional force between the driven shaft and the clutch unit.

13. The display rotation apparatus in accordance with claim 12, wherein the frictional force between the driven shaft and the clutch unit is smaller than the cogging torque of the motor.

14. The display rotation apparatus in accordance with claim 13, wherein the display rotation apparatus further comprises one or more washers interposed between the clutch unit and the driven shaft.
